# EUROPEAN PATENT APPLICATION

(11) **EP 3 045 481 A1**
(43) Date of publication of application: **20.07.2016**
(21) Application number: 14844869.9
(22) Date of filing: 08.09.2014
(51) Int. Cl.: C08F 220/18, C08L 33/12, G02B 6/00

(54) **METHACRYLIC RESIN COMPOSITION**

(30) Priority: 11.09.2013 JP 2013188011
(71) Applicant: Sumitomo Chemical Company Limited, Tokyo 104-8260 (JP)
(72) Inventor: WAKE, Takao, Niihama-shi Ehime 792-8521 (JP); MANABE, Makoto, Niihama-shi Ehime 792-8521 (JP)
(74) Representative: Duckworth, Timothy John
(86) International application number: PCT/JP2014/074163
(87) International publication number: WO 2015/037691

(57) **Abstract**

Provided is a methacrylic resin composition which comprises a copolymer produced by polymerizing monomer components including methyl methacrylate and an acrylic acid ester, wherein the contents of methyl methacrylate and the acrylic acid ester are 95.5% by weight or more and 4.5% by weight or less, respectively. A solution of the methacrylic resin composition in chloroform having a concentration of 0.5 g/50 ml has a reduced viscosity of 40 to 50 ml/g at 25°C, and the triad syndiotacticity in a methyl methacrylate unit chain is 47 to 51%. The resin composition is useful for injection molding.

## Description

### Technical Field

The present invention relates to a methacrylic resin composition suitably used as a molding material for producing a light guide plate, a vehicular thick molded article, a light guide rod, and the like especially by injection molding, and to an injection-molded article produced by using the methacrylic resin composition.

### Background Art

A methacrylic resin has excellent transparency, and therefore has been conventionally used as a material of molded articles such as a light guide plate, a vehicular thick molded article and a light guide rod, which require a light transmission property. These molded articles are usually produced by injection molding. As a molding material for obtaining optical members such as a light guide plate by injection molding as mentioned above, various types of methacrylic resin compositions have been heretofore reported.

For example, JP 08-269291 A (Patent Literature 1) and JP 08-302145 A (Patent Literature 2) disclose a methacrylic resin composition obtained by blending, with a small amount of each of a fatty acid having 8 to 22 carbon atoms and a fatty alcohol having 8 to 22 carbon atoms, a methacrylic resin as a copolymer of methyl methacrylate and an alkyl acrylate, the methacrylic resin having a reduced viscosity of 30 to 90 ml/g in chloroform measured at 25°C or having an S/H ratio of 1.1 to 1.5, the S/H ratio being a ratio of the ¹H intensity (S) of an α-methyl group derived from a syndiotactic chain to the ¹H intensity (H) of an α-methyl group derived from a heterotactic chain in a methyl methacrylate chain according to a stereoregularity evaluation of ¹H-NMR at 400 MHz.

JP 08-253650 A (Patent Literature 3) discloses a methacrylic resin composition for a light guide plate, which is obtained by blending, with a small amount of a higher fatty acid monoester of glycerin, a methacrylic resin as a copolymer of methyl methacrylate and an alkyl acrylate, the methacrylic resin having a reduced viscosity of 30 to 60 ml/g in chloroform measured at 25°C and having a moisture content of 1 to 800 ppm.

JP 2006-298966 A (Patent Literature 4) discloses a methacrylic resin composition for an injection-molded light guide plate, which is obtained by blending, with a small amount of each of a higher alcohol having 16 to 18 carbon atoms and a paraffin having 20 to 35 carbon atoms, a methacrylic resin as a copolymer of methyl methacrylate and methyl acrylate and/or ethyl acrylate, the methacrylic resin having a reduced viscosity of 40 to 55 ml/g in chloroform measured at 25°C and having a melt flow rate of 5 to 15 g/10 minutes.

JP 2010-285483 A (Patent Literature 5) discloses a methacrylic resin composition for a light guide plate containing a copolymer of methyl methacrylate and an acrylic acid ester, having a reduced viscosity of 0.46 to 0.55 dl/g (46 to 55 ml/g) at 25°C measured as a solution at a concentration of 0.5 g/50 ml in chloroform, and having a melt flow rate of 8 g/10 minutes or more at 230°C measured under a load of 37.3 N.

In the meantime, along with reduction in thickness of various types of liquid crystal displays for a laptop personal computer, a monitor, and so on, reduction in thickness is also required of a light guide plate used for these products. For example, a thin light guide plate having a thickness of 1 mm or less is required. However, when the methacrylic resin compositions mentioned above are formed into a thickness of 1 mm or less by injection molding, silver or white striations called silver streaks are caused in a resultant molded article in some cases. Therefore, a methacrylic resin composition is also proposed which can be molded into a thin thickness of 1 mm or less by injection molding, while the generation of silver streaks is suppressed. That is, JP 2010-285482 A (Patent Literature 6) discloses a methacrylic resin composition for a thin light guide plate having a thickness of 1 mm or less, which contains a copolymer of methyl methacrylate and an acrylic acid ester, which has a reduced viscosity of 0.47 to 0.55 dl/g (47 to 55 ml/g) at 25°C measured as a solution at a concentration of 0.5 g/50 ml in chloroform, and which has a melt flow rate of 18 g/10 minutes or more at 230°C measured under a load of 37.3 N.

Further, it is also known to blend a methacrylic resin with a specific phosphite compound for suppression of coloration caused by heating during injection molding of a vehicular lens and a light guide body, to obtain a molded article having a good outer appearance. For example, JP 07-331018 A (Patent Literature 7) and JP 09-012822 (Patent Literature 8) disclose a methacrylic resin composition obtained by blending a copolymer of methyl methacrylate and a (meth)acrylic acid alkyl ester other than methyl methacrylate with a small amount of a pentaerythritol diphosphite compound as typified by bis(isodecyl)pentaerythritol diphosphite or nonylphenyltridecylpentaerythritol diphosphite.

### Citation List

Patent Literature 1: JP 08-269291 A
Patent Literature 2: JP 08-302145 A
Patent Literature 3: JP 08-253650 A
Patent Literature 4: JP 2006-298966 A
Patent Literature 5: JP 2010-285483 A
Patent Literature 6: JP 2010-285482 A
Patent Literature 7: JP 07-331018 A
Patent Literature 8: JP 09-012822 A

### Summary of Invention

A thin light guide plate having a thickness of 1 mm or less used for various types of liquid crystal displays for a laptop personal computer, a monitor, and so on is sometimes subjected to a high temperature and high humidity environment due to lighting of a light source such as an LED, and therefore is required to be unlikely to contract in a high temperature and high humidity environment and to be excellent in heat resistance. Although the methacrylic resin composition disclosed in Patent Literature 6 can suppress the generation of silver streaks and allow thin molding of 1 mm or less in thickness, a molded article obtained therefrom is likely to contract in a high temperature and high humidity environment, and therefore the molded article is not necessarily satisfactory in terms of heat resistance.

For molding of a vehicular thick molded article or a light guide rod, it is required to shorten the cooling time taken for solidifying a heated and molten resin in order to shorten the molding time. Although the methacrylic resin compositions disclosed in Patent Literatures 7 and 8 can make the outer appearance of a molded article good, they are not sufficient in fluidity and heat resistance and therefore are not expected in the shortening of the cooling time.

Thus, an object of the present invention is to provide a methacrylic resin composition which is high in fluidity and excellent in heat resistance, suppresses the generation of silver streaks when a thin article such as a light guide plate is molded, allows thin molding of 1 mm or less in thickness, can give a molded article that is unlikely to contract in a high temperature and high humidity environment, and allows the shortening of the molding time when a thick article such as a vehicular thick molded article or a light guide rod is molded. Another object of the present invention is to apply the composition to the production of an injection-molded article.

The present inventors have conducted earnest studies to solve the above problems, and consequently have found that in a copolymer obtained by polymerizing monomer components containing methyl methacrylate and an acrylic acid ester, it is effective to set the content of the methyl methacrylate constituting the monomer components to a specific amount or more, and to make the reduced viscosity of the copolymer and the syndiotacticity in a methyl methacrylate unit chain fall within prescribed ranges. Thus, the present invention has been completed.

That is, according to the present invention, there is provided a methacrylic resin composition comprising a copolymer obtained by polymerizing monomer components containing methyl methacrylate and an acrylic acid ester, the methyl methacrylate being contained in an amount of 95.5% by weight or more and the acrylic acid ester being contained in amount of 4.5% by weight or less; having a reduced viscosity of 40 to 50 ml/g at 25°C measured as a solution at a concentration of 0.5 g/50 ml in chloroform; and having a triad syndiotacticity (i.e. syndiotacticity by a triad expression) of 47 to 51% in a methyl methacrylate unit chain.

It is advantageous to produce this methacrylic resin composition by bulk polymerization of the above-mentioned monomer components. The methacrylic resin composition may contain a thermal stabilizing agent. The methacrylic resin composition may also contain a mold release agent, and the amount thereof is preferably in the range of 0.01 to 1% by weight with respect to a total amount of the methacrylic resin composition.

These methacrylic resin compositions can be suitably used for injection molding applications. Thus, according to the present invention, there is also provided an injection-molded article produced by injection molding of any one of the above-mentioned methacrylic resin compositions.

According to the methacrylic resin composition of the present invention, an injection-molded article being high in fluidity and excellent in heat resistance can be produced. The composition can give effects of suppressing the generation of silver streaks when a thin article such as a light guide plate is molded, allowing thin molding of 1 mm or less in thickness, giving a molded article that is unlikely to contract even in a high temperature and high humidity environment, and allowing the shortening of the molding time required for thick molding of, for example, a vehicular thick molded article or a light guide rod.

### Brief Description of Drawings

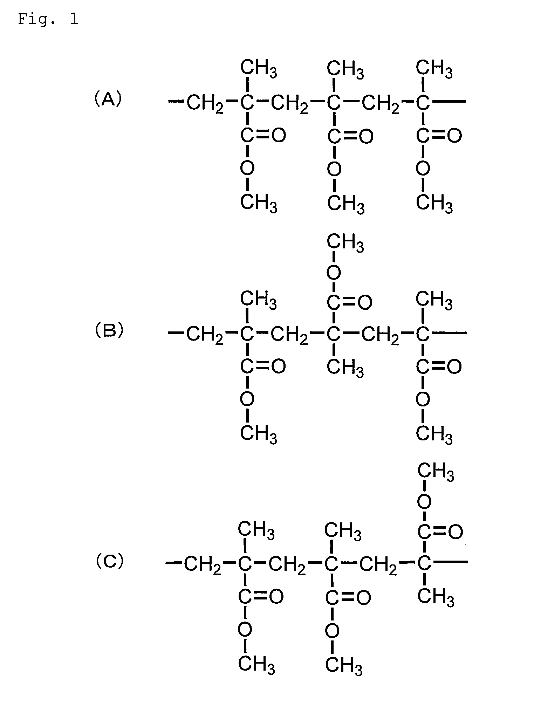

Fig. 1 is drawings for describing the stereoregularity of poly(methyl methacrylate).

### Description of Embodiments

### [Methacrylic resin composition]

The methacrylic resin composition of the present invention contains a copolymer obtained by polymerizing monomer components containing methyl methacrylate and an acrylic acid ester, and the methyl methacrylate is contained in an amount of 95.5% by weight or more and the acrylic acid ester is contained in an amount of 4.5% by weight or less in the monomer components. The monomer components essentially contain methyl methacrylate and an acrylic acid ester, and may additionally contain other monomer(s) that is polymerizable with at least one of the methyl methacrylate and the acrylic acid ester.

### [Copolymer and production thereof]

In the monomer components, the content of the methyl methacrylate is 95.5% by weight or more, preferably 95.5% by weight or more and 99.9% by weight or less, more preferably 95.5% by weight or more and 99.5% by weight or less. The content of the methyl methacrylate may be 97.0% by weight or more. In the monomer components, the content of the acrylic acid ester is 4.5% by weight or less, preferably 0.5% by weight or more and 4.5% by weight or less, more preferably 0.5% by weight or more and 4.5% by weight or less. The content of the acrylic acid ester may be 3.0% by weight or less. When the content of the acrylic acid ester in the monomer components exceeds 4.5% by weight, the heat resistance of a molded article (e.g., a light guide plate) obtained from the methacrylic resin composition cannot be sufficiently enhanced. It is desired especially in thick molding to shorten the cooling time taken for solidifying a molten resin by enhancing the heat resistance of the composition, i.e., to shorten the molding cycle, and for achieving this requirement, the Vicat softening temperature (B50 method) described below preferably falls within the range of 107° to 114°C, especially preferably the range of 110° to 114°C. However, when the content of the acrylic acid ester in the monomer components exceeds 4.5% by weight, such a high Vicat softening temperature cannot be achieved.

The acrylic acid ester constituting the monomer components is preferably an alkyl ester or cycloalkyl ester of acrylic acid, and examples thereof include methyl acrylate, ethyl acrylate, propyl acrylate, n-butyl acrylate, sec-butyl acrylate, tert-butyl acrylate, cyclohexyl acrylate, and 2-ethylhexyl acrylate. Among them, methyl acrylate or ethyl acrylate is preferred. These acrylic acid esters may be used alone or in combination of two or more of them in the range satisfying the above-mentioned content in the monomer components. Even when two or more of the acrylic acid esters are used, the total content of the acrylic acid esters in the monomer components is set to 4.5% by weight or less.

Other monomer(s) to be optionally used is not particularly limited as long as it is polymerizable with at least one of the methyl methacrylate and the acrylic acid ester, and examples thereof include a monofunctional monomer having one radical-polymerizable double bond and a polyfunctional monomer having two or more radical-polymerizable double bonds. Specific examples of the monofunctional monomer having one radical-polymerizable double bond include methacrylic acid esters such as ethyl methacrylate, propyl methacrylate, n-butyl methacrylate, sec-butyl methacrylate, tert-butyl methacrylate, 2-ethylhexyl methacrylate, cyclohexyl methacrylate, benzyl methacrylate, and cyclopentadienyl methacrylate; unsaturated carboxylic acids or unsaturated polycarboxylic anhydrides such as acrylic acid, methacrylic acid, maleic acid, itaconic acid, maleic acid anhydride, and itaconic acid anhydride; nitrogen-containing monomers such as acrylamide, methacrylamide, acrylonitrile, and methacrylonitrile; and styrene-based monomers such as styrene and α-methylstyrene. Examples of the polyfunctional monomer having two or more radical-polymerizable double bonds include unsaturated carboxylic acid diesters of glycols such as ethylene glycol dimethacrylate and butanediol dimethacrylate; alkenyl .esters of unsaturated carboxylic acids such as allyl acrylate, allyl methacrylate, and allyl cinnamate; polyalkenyl esters of polybasic acids such as diallyl phthalate, diallyl maleate, triallyl cyanurate, and triallyl isocyanurate; unsaturated carboxylic acid esters of polyalcohols such as trimethylolpropane triacrylate; and divinylbenzene. When these other monomers are copolymerized, only one of them may be used, or two or more of them may be used in combination.

In the present invention, since the monomer components containing the methyl methacrylate and the acrylic acid ester contain 95.5% by weight or more of the methyl methacrylate, even when the above-mentioned other monomer(s) is used, the amount thereof is small, and for example, is preferably 1% by weight or less, and further 0.5% by weight or less in the monomer components. More preferably, such other monomer(s) is not substantially contained in the monomer components.

The polymerization method for polymerizing the monomer components described above is not particularly limited, and known polymerization methods such as suspension polymerization, solution polymerization, and bulk polymerization can be employed, but among them, bulk polymerization is preferred. The bulk polymerization is conducted by, for example, continuously supplying the monomer components, a polymerization initiator, and so on into a reactor and continuously taking out therefrom a partially polymerized material resulted after a prescribed residence time in the reactor, so that a copolymer can be produced with high productivity.

The polymerization initiator used for polymerizing the monomer components is not particularly limited, and known radical polymerization initiators, for example, azo compounds such as azobisisobutyronitrile and peroxides such as 1,1-di(tert-butylperoxy)cyclohexane can be used. As the polymerization initiator, only one thereof may be used, or two or more thereof may be used in combination.

For polymerizing the monomer components, a chain transfer agent may be used, if necessary. The chain transfer agent is not particularly limited, and preferable examples thereof include mercaptans such as n-butylmercaptan, n-octylmercaptan, n-dodecylmercaptan, and 2-ethylhexyl thioglycolate. As the chain transfer agent, only one thereof may be used, or two or more thereof may be used in combination.

### [Other typical component(s) that may be blended with methacrylic resin composition]

The methacrylic resin composition of the present invention preferably contains, together with the copolymer described above, a mold release agent that improves the release property of a resultant molded article released from a mold when the molded article is produced by injection molding of the methacrylic resin composition. When the mold release agent is blended, the amount thereof is preferably 0.01 to 1% by weight, further preferably 0.05% by weight or more and 1.0% by weight or less, or particularly 0.5% by weight or less, with respect to the total amount of the methacrylic resin composition. The type of the mold release agent is not particularly limited, and examples thereof include a higher fatty acid ester, a higher fatty alcohol, a higher fatty acid, a higher fatty acid amide, and a higher fatty acid metal salt. When the mold release agent is blended, only one thereof may be used, or two or more thereof may be used in combination.

Examples of the higher fatty acid ester as the mold release agent include saturated fatty acid alkyl esters such as methyl laurate, ethyl laurate, propyl laurate, butyl laurate, octyl laurate, methyl palmitate, ethyl palmitate, propyl palmitate, butyl palmitate, octyl palmitate, methyl stearate, ethyl stearate, propyl stearate, butyl stearate, octyl stearate, stearyl stearate, myristyl myristate, methyl behenate, ethyl behenate, propyl behenate, butyl behenate, and octyl behenate; unsaturated fatty acid alkyl esters such as methyl oleate, ethyl oleate, propyl oleate, butyl oleate, octyl oleate, methyl linoleate, ethyl linoleate, propyl linoleate, butyl linoleate, and octyl linoleate; saturated fatty acid glycerides such as lauric acid monoglyceride, lauric acid diglyceride, lauric acid triglyceride, palmitic acid monoglyceride, palmitic acid diglyceride, palmitic acid triglyceride, stearic acid monoglyceride, stearic acid diglyceride, stearic acid triglyceride, behenic acid monoglyceride, behenic acid diglyceride, and behenic acid triglyceride; and unsaturated fatty acid glycerides such as oleic acid monoglyceride, oleic acid diglyceride, oleic acid triglyceride, linolic acid monoglyceride, linolic acid diglyceride, and linolic acid triglyceride. Among them, stearic acid esters such as methyl stearate, ethyl stearate, butyl stearate, octyl stearate, stearic acid monoglyceride, stearic acid diglyceride, and stearic acid triglyceride are preferred.

Examples of the higher fatty alcohol as the mold release agent include saturated fatty alcohols such as lauryl alcohol, palmityl alcohol, stearyl alcohol, isostearyl alcohol, behenyl alcohol, myristyl alcohol, and cetyl alcohol; and unsaturated fatty alcohols such as oleyl alcohol and linolyl alcohol. Among them, stearyl alcohol is preferred.

Examples of the higher fatty acid as the mold release agent include saturated fatty acids such as caproic acid, caprylic acid, capric acid, lauric acid, myristic acid, palmitic acid, stearic acid, arachidic acid, behenic acid, lignoceric acid, and 12-hydroxyoctadecanoic acid; and unsaturated fatty acids such as palmitoleic acid, oleic acid, linoleic acid, linolenic acid, cetoleic acid, erucic acid, and ricinoleic acid. Among them, stearic acid is preferred.

Examples of the higher fatty acid amide as the mold release agent include saturated fatty acid amides such as lauric acid amide, palmitic acid amide, stearic acid amide, and behenic acid amide; unsaturated fatty acid amides such as oleic acid amide, linoleic acid amide, and erucic acid amide; and amides such as ethylene-bis-lauric acid amide, ethylene-bis-palmitic acid amide, ethylene-bis-stearic acid amide, and N-oleylstearamide. Among them, stearic acid amide and ethylene-bis-stearic acid amide are preferred.

Examples of the higher fatty acid metal salt as the mold release agent include a sodium salt, potassium salt, calcium salt and barium salt of the above-mentioned higher fatty acids.

The methacrylic resin composition of the present invention preferably contains, together with the copolymer described above, a thermal stabilizing agent for suppressing thermal decomposition of the copolymer. When the thermal stabilizing agent is blended, the amount thereof is preferably about 1 to 2,000 ppm by weight with respect to the total amount of the methacrylic resin composition. When the methacrylic resin composition is injection-molded to produce a desired molded article, the molding temperature is set at a higher temperature for the purpose of increasing molding efficiency in some cases. The blending of the thermal stabilizing agent in such cases is more effective. The type of the thermal stabilizing agent is not particularly limited, and examples thereof include a phosphorus-based thermal stabilizing agent and an organic disulfide compound. Among them, an organic disulfide compound is preferred. When the thermal stabilizing agent is blended, only one thereof may be used, or two or more thereof may be used in combination.

Examples of the phosphorus-based thermal stabilizing agent include tris(2,4-di-tert-butylphenyl)phosphite, 2-[[2,4,8,10-tetrakis(1,1-dimethylethyl)dibenzo[d,f][1,3,2]dioxaphosphepin-6-yl]oxy]-N,N-bis[2-[[2,4,8,10-tetrakis(1,1-dimethylethyl)dibenzo[d,f][1,3,2]dioxaphosphepin-6-yl]oxy]-ethyl]ethanamine, diphenyl tridecyl phosphite, triphenyl phosphite, 2,2'-methylenebis(4,6-di-tert-butylphenyl)octylphosphite, and bis(2,6-di-tert-butyl-4-methylphenyl)pentaerythritol diphosphite. Among them, 2,2'-methylenebis(4,6-di-tert-butylphenyl)octylphosphite is preferred.

Examples of the organic disulfide compound as the thermal stabilizing agent include dimethyl disulfide, diethyl disulfide, di-n-propyl disulfide, di-n-butyl disulfide, di-sec-butyl disulfide, di-tert-butyl disulfide, di-tert-amyl disulfide, dicyclohexyl disulfide, di-tert-octyl disulfide, di-n-dodecyl disulfide, and di-tert-dodecyl disulfide. Among them, di-tert-alkyl disulfide is preferred, and di-tert-dodecyl disulfide is more preferred.

The methacrylic resin composition of the present invention may contain, in addition to the copolymer, the mold release agent and thermal stabilizing agent described above, various additives such as an ultraviolet absorbing agent, a light diffusing agent, an antioxidizing agent, and an antistatic agent, if necessary, as long as the effects of the present invention are not impaired. When the mold release agent, the thermal stabilizing agent or various additives (hereinafter collectively referred to as the "additive(s)") are blended, the additive(s) may be contained, for example, by (I) a method in which the copolymer obtained by polymerizing the monomer components and the additive (s) are mixed with each other while being heated, melted and kneaded in a single screw extruder or a twin screw extruder, (II) a method in which the monomer components and the additive(s) are mixed with each other, and the resultant mixture is polymerized by being subjected to a polymerization reaction, and (III) a method in which the additive (s) is attached to a surface of pellets or beads made of the copolymer described in the above (I), and is mixed with the copolymer simultaneously with molding.

The methacrylic resin composition of the present invention contains, as a resin component, the above-mentioned copolymer of the methyl methacrylate and the acrylic acid ester. As described above, the copolymer may be obtained by being copolymerized with other monomer(s), and this resin composition can also contain an additive(s) such as a mold release agent and a thermal stabilizing agent. As the additive(s), the existence of a resin component other than the above-mentioned copolymer is not excluded. However, since the resin composition has, as will be described below, a reduced viscosity and a syndiotacticity in prescribed ranges, even when a resin component other than the copolymer is contained, the amount thereof is not preferably too much, and particularly, the resin component is more preferably substantially composed of the copolymer only.

### [Physical properties of methacrylic resin composition]

This methacrylic resin composition has a reduced viscosity of 40 to 50 ml/g at 25°C measured as a solution at a concentration of 0.5 g/50 ml in chloroform. The reduced viscosity is preferably 41 to 49 ml/g, more preferably 42 to 48 ml/g. When the reduced viscosity is less than 40 ml/g, the heat resistance of a resultant molded article (e.g., a light guide plate) cannot be sufficiently enhanced, and further, the strength of a molded article is deteriorated, and the shortening of the molding cycle in thick molding cannot be expected. On the other hand, when the reduced viscosity exceeds 50 ml/g, the filling property to a mold on injection molding becomes poor and the molding temperature during thick molding cannot be lowered, so that the shortening of the cooling time for solidifying a molten resin, i.e., the shortening of the molding cycle becomes difficult. The reduced viscosity can be measured in accordance with the method specified in ISO 1628-6: 1990 "Plastics - Determination of viscosity number and limiting viscosity number - Part 6: Methyl methacrylate polymers."

In order that the reduced viscosity falls within the above-mentioned range, for example, the used amount of a chain transfer agent to be used for polymerizing the monomer components may be adjusted, and specifically, when the amount of the chain transfer agent is increased, the reduced viscosity can be lowered. Thus, the amount of the chain transfer agent is preferably selected from the range of about 0.35 to 0.5 parts by weight with respect to the total of 100 parts by weight of the monomer components constituting the copolymer, in consideration of relationship with the monomer composition, the polymerization temperature, other component(s) used for the polymerization such as a polymerization initiator, and so on.

Further, the methacrylic resin composition of the present invention is made to have a triad syndiotacticity of 47 to 51% in a methyl methacrylate unit chain. The syndiotacticity is preferably 47 to 50%, more preferably 48 to 50%. When the triad syndiotacticity is less than 47%, sufficient heat resistance may not be possibly obtained. On the other hand, when the triad syndiotacticity is more than 51%, the heat resistance of the resin composition or a molded article obtained therefrom is improved, but silver streaks are likely to be generated.

Here, the stereoregularity of a polymer will be described taking poly(methyl methacrylate) as an example with reference to Fig. 1. Fig. 1 is drawings (chemical formulae) for describing the stereoregularity in poly(methyl methacrylate), i.e., a methyl methacrylate unit chain, wherein (A), (B) and (C) each show three successive monomer (methyl methacrylate) units which are referred to as a triad expression.

A polymer has a structure in which monomer units, i.e. units of methyl methacrylate with a polymerizable double bond opened in the case of poly(methyl methacrylate), are connected in succession, and when an asymmetric carbon atom exists, stereoregularity (also referred to as tacticity) is caused. In the poly(methyl methacrylate), a methyl group (-CH₃) and a methoxycarbonyl group (-COOCH₃) are branched from an asymmetric carbon atom in the main chain as shown in the drawings, and the methyl group (α-methyl group) bonded to the asymmetric carbon atom will be mainly described below. Two successive monomer units are referred to as a dyad, and three successive monomer units are referred to as a triad. In the dyad unit, the state in which the groups branched from the main chain (α-methyl groups in the drawings) are in the same direction (the state in which the groups are in the same upper or lower side with respect to the main chain in the drawings) is referred to as being meso, and the state in which the groups are opposite to each other is referred to as being racemic.

In the triad expression, there are three stereoregularities, that is, a meso-meso (mm) structure as shown in Fig. 1(A), a racemic-racemic (rr) structure as sown in Fig. 1(B), and a meso-racemic (mr) structure as sown in Fig. 1(C). In Fig. 1(A), with respect to the center monomer unit, the left side unit is meso and the right side unit is also meso, so that the structure is an mm structure. In Fig. 1(B), with respect to the center monomer unit, the left side unit is racemic and the right side unit is also racemic, so that the structure is an rr structure. In Fig. 1(C), with respect to the center monomer, the left side unit is meso and the right side unit is racemic, so that the structure is an mr structure. The mm structure as shown in Fig. 1(A) is referred to as being isotactic, the rr structure as shown in Fig. 1 (B) is referred to as being syndiotactic, and the mr structure as shown in Fig. 1(C) is referrred to as being heterotactic. When a polymer is considered not in such a triad expression but in a whole polymer, the structure in which the stereoregularities are at random is referred to as being atactic.

The stereoregularity of a polymer can be evaluated by measuring a proton nuclear magnetic resonance (¹H-NMR) spectrum. In examples described below, the proton nuclear magnetic resonance spectrum of a copolymer (methacrylic resin composition) is measured; the respective integration ratios for three peaks derived from an α-methyl group of a methyl methacrylate unit, i.e. a peak derived from α-methyl groups of a syndiotactic structure (rr), a peak derived from α-methyl groups of a heterotactic structure (mr), and a peak derived from α-methyl groups of an isotactic structure (mm), are obtained from the spectrum; the proportion of the integration ratio for the peak derived from the α-methyl groups of the syndiotactic structure (rr) to the total of the integration ratios for the above three peaks is calculated; and the calculated value is defined as a triad syndiotacticity (i.e. syndiotacticity by a triad expression) in the methyl methacrylate unit chain.

In the methacrylic resin composition of the present invention, the triad syndiotacticity in a methyl methacrylate unit chain determined as described above falls within the range of 41 to 51%, that is, the syndiotactic structure (rr) is made to be contained at the relatively large amount.

In order that the syndiotacticity falls within the above-mentioned range, for example, the polymerization temperature in production of a copolymer may be adjusted, and specifically, when the polymerization temperature is increased, the syndiotacticity decreases, and when the polymerization temperature is lowered, the syndiotacticity increases. Therefore, the polymerization temperature is preferably selected from the range of about 110° to 160°C in consideration of relationship with the monomer composition, other component(s) used for the polymerization such as a polymerization initiator and a chain transfer agent, and so on. The polymerization temperature is more preferably selected from the range of about 110° to 150°C.

In the present invention, the fluidity and the heat resistance are secured by allowing the reduced viscosity and the syndiotacticity of the methacrylic resin composition to fall within the prescribed ranges. As a physical property for expressing fluidity, a melt flow rate is used. The melt flow rate can be measured in accordance with a method specified in JIS K7210:1999 "Plastics - Determination of the Melt Mass-Flow Rate (MFR) and the Melt Volume-Flow Rate (MVR) of Thermoplastics." The JIS specifies that the melt flow rate of a poly(methyl methacrylate)-based material is measured at a temperature of 230°C under a load of 3.80 kg (37.3N). In the methacrylic resin composition of the present invention, the melt flow rate can be set to the range of about 5 g/10 minutes or more and 16 g/10 minutes or less. The melt flow rate is preferably in the range of 5 g/10 minutes to 16 g/10 minutes, more preferably 8 g/10 minutes to 12 g/10 minutes because the cooling time taken for solidifying a molten resin is shortened, that is, the molding cycle can be shortened by lowering the molding temperature in thick molding.

As a physical property related to heat resistance, a Vicat softening temperature is used. The Vicat softening temperature can be measured in accordance with a method specified in JIS K7206:1999 "Plastics -Thermoplastic materials- Determination of Vicat softening temperature (VST)." In the examples described below, among the methods specified in the JIS, the B50 method is employed. In the methacrylic resin composition of the present invention, the Vicat softening temperature can be set to the range of about 107°C or more and 114°C or less. The Vicat softening temperature is preferably in the range of 107° to 114°C, more preferably in the range of 110° to 114°C because the cooling time taken for solidifying a molten resin is shortened, that is, the molding cycle can be shortened by enhancing the heat resistance of the methacrylic resin composition particularly in thick molding.

### [Applications of methacrylic resin composition]

The methacrylic resin composition of the present invention is high in fluidity and is excellent in heat resistance. Therefore, when this composition is applied to production of a thin molded article such as a light guide plate, a molded article can be produced in which the generation of silver streaks is suppressed and which is unlikely to contract in a high temperature and high humidity environment and is excellent in heat resistance. In addition, when this composition is applied to production of a thick molded article such as a vehicular thick molded article or a light guide rod, the molding time can be shortened. Therefore, this composition can be preferably used in production of various molded articles for interior and exterior uses, such as a light guide plate, an optical film, a display front board, a signboard, lighting equipment, a face plate (or nameplate), and a vehicle member. For the production of these molded articles, conventionally known molding methods are used, such as injection molding, melt extrusion molding, and press molding of the methacrylic resin composition. Among them, this methacrylic resin composition is suitable for injection molding of a thin molded article such as a light guide plate and for injection molding of a thick molded article such as a vehicular thick molded article, a light guide rod or the like. Here, the boundary between "thin" and "thick" is about 10 mm in thickness of the thickest part, but even when the methacrylic resin composition of the present invention is applied to give a product having a thickness of 1 mm or less, the generation of silver streaks is suppressed and a good molded article can be produced.

A light guide plate is a plate-like or cuneate molded article disposed, as a light supply source of a liquid crystal display device, on a back side of a liquid crystal cell. A vehicular thick molded article (or thick molded article for vehicles) is a molded article used for headlights of particularly recent expensive cars, and is, for example, a poly-ellipsoid system (PES), a positioning light, a daylight for lightening a front light, etc. of a vehicle during daytime, or the like, and some of the vehicular thick molded articles have the thickest part as thick as about 30 mm. A light guide rod is a cylindrical rod-shaped molded article used as, for example, a light for display or a light for a scanner, some of them have a diameter of about 3 to 20 mm, and some of them are classified as a thin article according to the above classification taking a thickness of about 10 mm as the boundary.

Injection molding can be conducted by a method of injecting and filling a mold (or metal mold) with a methacrylic resin composition in a molten state, then cooling the composition, and releasing a molded article from the mold. Specifically, the injection molding can be conducted, for example, by a method in which the methacrylic resin composition of the present invention is charged from a hopper, a screw is set back while being revolved, the resin composition is measured and filled into a cylinder, the resin composition is molten, a pressure is applied to the molten resin composition to fill a mold, it is retained with a pressure applied thereon for a certain time period until the mold cools down sufficiently, and then the mold is opened to release a molded article. Various conditions for production of an injection-molded article, such as a melt temperature of the molding material, a mold temperature on injecting the mold material into the mold, and a pressure which is kept after the resin composition fills the mold, may be appropriately set according to the shape and so on of a desired molded article, and are not particularly limited.

### Examples

The present invention will be further described in detail below with reference to examples, but is not limited by these examples. In the examples, the parts and ppm expressing a used amount are based on the weight unless otherwise specified. Measurement and evaluation of various physical properties of resultant resin compositions are conducted by the following methods.

### <Reduced viscosity>

In accordance with ISO 1628-6: 1990 described above, 0.5 g of a methacrylic resin composition was dissolved in 50 ml of chloroform, and the reduced viscosity of the resultant solution was measured at 25°C with an Ostwald viscometer.

### <Syndiotacticity>

The nuclear magnetic resonance spectrum was measured by using a proton nuclear magnetic resonance spectrum apparatus ("Varian NMR System PS400WB" manufactured by Agilent Technologies, Inc.) and applying deuterated chloroform as a solvent. From the obtained nuclear magnetic resonance spectrum, the proportion of the integration ratio for a peak derived from α-methyl groups of a syndiotactic structure (rr) to the total of the integration ratios for three peaks derived from an α-methyl group of a methyl methacrylate unit (the peak derived from the α-methyl groups of the syndiotactic structure (rr), a peak derived from α-methyl groups of a heterotactic structure (mr), and a peak derived from α-methyl groups of an isotactic structure (mm)) was calculated. The thus obtained value was used as a triad syndiotacticity in the methyl methacrylate unit chain.

### <Vicat softening temperature>

In accordance with the B50 method of JIS K7206: 1999 described above, the Vicat softening temperature was measured by using a heat distortion tester ("148-6 series type" manufactured by YASUDA SEIKI SEISAKUSHO, LTD.).

### <Melt flow rate (MFR)>

In accordance with JIS K7210:1999 described above, the flow rate was measured at a temperature of 230°C under a load of 37.3N, and the measured value was converted into a value per 10 minutes.

### <Contraction amount in high temperature and high humidity environment>

A flat plate having a screen size of 15 inches (381 mm) in diagonal and a thickness of 0.8 mm was prepared at a molding temperature of 315°C and a mold temperature of 80°C by using an electromotive injection molding apparatus ("J450EL III-890H" manufactured by The Japan Steel Works, LTD.) and was cut out into a strip-like test piece having a long side of 180 mm and a short side of 20 mm. This test piece was subjected to a high temperature and high humidity test in which the test piece was left at rest for 120 hours in an environment of a temperature of 85°C and a relative humidity of 85%, and then the length of the long side of the test piece was measured. The length of the long side after the test was subtracted from the length of the long side before the test (180 mm), and the obtained value was used as a contraction amount in the high temperature and high humidity environment ["contraction amount in high temperature and high humidity environment" = "length of long side before test (180 mm)" - "length of long side after test"]. The smaller the contraction amount is, the less likely a molded article is to contract in a high temperature and high humidity environment, and this means that the article is excellent in heat resistance.

### <Presence or absence of silver streaks>

By using the same electromotive injection molding apparatus manufactured by The Japan Steel Works, LTD. as described above, 10 flat plates each having the same size as described above (diagonal 15 inches, thickness 0.8 mm) were prepared at a molding temperature of 310°C and a mold temperature of 80°C. When no silver streak was generated on any of the 10 plates, the quality was rated as "G" (good), and when a silver streak(s) was generated on any one of the 10 plates, the quality was rated as "B" (bad).

### <Molding time in thick molding>

A thick molded article having a size of 50 mm x 50 mm x thickness 20 mm was molded at a molding temperature of 225°C and a mold temperature of 100°C, at an injection rate of 1 mm/second by using an injection molding apparatus (manufactured by NIIGATA MACHINE TECHNO CO., LTD.). At this time, the molding time from the start of injection to the opening of the mold and removal of a product having no defect in outer appearance was measured. This value of the time is also referred to as a molding cycle, and when the mold is opened before the lapse of this time, the product will be a defective due to insufficient cooling. Accordingly, the shorter this molding time is, the better the productivity is.

### [Example 1]

A polymerization reactor equipped with a stirrer was supplied respectively and continuously with 99.2 parts of methyl methacrylate (abbreviated as "MMA" in Table 1 below), 0.8 parts of methyl acrylate (abbreviated as "MA" in Table 1 below), 0.01 part of tert-amylperoxy 2-ethylhexanoate (abbreviated as "APEH" in Table 1 below) as a polymerization initiator, 0.40 parts of n-octylmercaptan as a chain transfer agent, 0.1 part of stearyl alcohol as a mold release agent, and di-tert-dodecyl disulfide as a thermal stabilizing agent at an amount corresponding to about 5 ppm with respect to the total amount of a finally obtained resin composition. The mixture was subjected to a polymerization reaction at 130°C for an average residence time of 50 minutes. Next, a reaction liquid (partially copolymerized material) which was taken out from the polymerization reactor was supplied to a devolatilizing extruder, kneaded sufficiently while unreacted monomer components were recovered by vaporization, and then shaped to obtain a methacrylic resin composition in the form of pellets.

The reduced viscosity and the syndiotacticity of the resultant methacrylic resin composition were as shown in Table 1. Further, using this resin composition, the Vicat softening temperature, the melt flow rate, the contraction amount in a high temperature and high humidity environment, the presence or absence of silver streaks, and the molding time in thick molding were evaluated according to the methods described above, and thus obtained results were shown in Table 1.

### [Example 2]

A methacrylic resin composition in the form of pellets was obtained by conducting the same operation as in Example 1 except for changing the amount of methyl methacrylate to 98 parts, the amount of methyl acrylate to 2 parts, and the amount of n-octylmercaptan used as a chain transfer agent from 0.40 parts to 0.37 parts. The reduced viscosity and the syndiotacticity of the resultant methacrylic resin composition were as shown in Table 1. Using this methacrylic resin composition, the Vicat softening temperature, the melt flow rate, the contraction amount in a high temperature and high humidity environment, and the presence or absence of silver streaks were evaluated according to the methods described above, and thus obtained results were shown in Table 1. In this example, the evaluation for the molding time in thick molding was omitted.

### [Example 3]

A methacrylic resin composition in the form of pellets was obtained by conducting the same operation as in Example 1 except for changing the amount of methyl methacrylate to 95.5 parts, the amount of methyl acrylate to 4.5 parts, and the amount of n-octylmercaptan used as a chain transfer agent from 0.40 parts to 0.39 parts. As to the resultant methacrylic resin composition, the same physical property measurement and evaluation as in Example 2 were conducted, and thus obtained results were shown in Table 1.

### [Example 4]

A methacrylic resin composition in the form of pellets was obtained by conducting the same operation as in Example 1 except for changing the amount of methyl methacrylate to 98 parts, the amount of methyl acrylate to 2 parts, and the amount of n-octylmercaptan used as a chain transfer agent from 0.40 parts to 0.41 parts. As to the resultant methacrylic resin composition, the same physical property measurement and evaluation as in Example 2 were conducted, and thus obtained results were shown in Table 1.

### [Example 5]

A methacrylic resin composition in the form of pellets was obtained by conducting the same operation as in Example 1 except for changing the amount of methyl methacrylate to 95.5 parts, the amount of methyl acrylate to 4.5 parts, and the amount of n-octylmercaptan used as a chain transfer agent from 0.40 parts to 0.35 parts. As to the resultant methacrylic resin composition, the same physical property measurement and evaluation as in Example 2 were conducted, and thus obtained results were shown in Table 1.

### [Comparative Example 1]

A methacrylic resin composition in the form of pellets was obtained by conducting the same operation as in Example 1 except for changing the amount of methyl methacrylate to 95 parts, the amount of methyl acrylate to 5 parts, and the amount of n-octylmercaptan used as a chain transfer agent from 0.40 parts to 0.41 parts. As to the resultant methacrylic resin composition, the same physical property measurement and evaluation as in Example 2 were conducted, and thus obtained results were shown in Table 1.

### [Comparative Example 2]

A methacrylic resin composition in the form of pellets was obtained by conducting the same operation as in Example 1 except for changing the amount of methyl methacrylate to 94.6 parts, the amount of methyl acrylate to 5.4 parts, and the amount of n-octylmercaptan used as a chain transfer agent from 0.40 parts to 0.37 parts, and further changing the polymerization temperature from 130°C to 135°C. As to the resultant methacrylic resin composition, the same physical property measurement and evaluation as in Example 2 were conducted, and thus obtained results were shown in Table 1.

### [Comparative Example 3]

A methacrylic resin composition in the form of pellets was obtained by conducting the same operation as in Example 1 except for changing the amount of methyl methacrylate to 95 parts, the amount of methyl acrylate to 5 parts, and 0.01 parts of tert-amylperoxy 2-ethylhexanoate to 0.02 parts of 1,1-di(tert-butylperoxy)cyclohexane (abbreviated as "BPCH" in Table 1 below), and further changing the polymerization temperature from 130°C to 175°C. As to the resultant methacrylic resin composition, the same physical property measurement and evaluation as in Example 2 were conducted, and thus obtained results were shown in Table 1.

### [Comparative Example 4]

A methacrylic resin composition in the form of pellets was obtained by conducting the same operation as in Comparative Example 3 except for changing the amount of methyl methacrylate to 98 parts, the amount of methyl acrylate to 2 parts, and the amount of n-octylmercaptan used as a chain transfer agent from 0.40 parts to 0.35 parts. As to the resultant methacrylic resin composition, the same physical property measurement and evaluation as in Example 2 were conducted, and thus obtained results were shown in Table 1.

### [Comparative Example 5]

A methacrylic resin composition in the form of pellets was obtained by conducting the same operation as in Example 1 except for changing the amount of methyl methacrylate to 93 parts, the amount of methyl acrylate to 7 parts, and the amount of n-octylmercaptan used as a chain transfer agent from 0.40 parts to 0.37 parts, and further changing the polymerization temperature from 130°C to 140°C. As to the resultant methacrylic resin composition, the same physical property measurement and evaluation as in Example 2 were conducted, and thus obtained results were shown in Table 1.

### [Comparative Example 6]

A methacrylic resin composition in the form of pellets was obtained by conducting the same operation as in Comparative Example 3 except for changing the amount of methyl methacrylate to 98.8 parts, the amount of methyl acrylate to 1.2 parts, and the amount of n-octylmercaptan used as a chain transfer agent from 0.40 parts to 0.24 parts. As to the resultant methacrylic resin composition, the same physical property measurement and evaluation as in Example 1 were conducted, and thus obtained results were shown in Table 1.

### [Comparative Example 7]

A methacrylic resin composition in the form of pellets was obtained by conducting the same operation as in Comparative Example 3 except for changing the amount of methyl methacrylate to 98 parts, the amount of methyl acrylate to 2 parts, and the amount of n-octylmercaptan used as a chain transfer agent from 0.40 parts to 0.15 parts. The reduced viscosity and the syndiotacticity of the resultant methacrylic resin composition were as shown in Table 1. Using this resin composition, the Vicat softening temperature, the melt flow rate, and the molding time in thick molding were evaluated according to the methods described above, and thus obtained results were shown in Table 1. In this example, the evaluation for the contraction amount in a high temperature and high humidity environment and the presence or absence of silver streaks were omitted.

### [Comparative Example 8]

A methacrylic resin composition in the form of pellets was obtained by conducting the same operation as in Comparative Example 3 except for changing the amount of methyl methacrylate to 93 parts and the amount of methyl acrylate to 7 parts, adding 0.1 parts of ethylene glycol dimethacrylate (abbreviated as "EGDM" in Table 1 below) as a third monomer component, and further changing the amount of n-octylmercaptan used as a chain transfer agent from 0.40 parts to 0.35 parts. As to the resultant methacrylic resin composition, the same physical property measurement and evaluation as in Example 2 were conducted, and thus obtained results were shown in Table 1.

**Table 1**

| | | Unit | Examples | | | | | Comparative Examples | | | | | | | |
|---|---|---|---|---|---|---|---|---|---|---|---|---|---|---|---|
| | | | 1 | 2 | 3 | 4 | 5 | 1 | 2 | 3 | 4 | 5 | 6 | 7 | 8 |
| Monomer component | MMA | parts | 99.2 | 98.0 | 95.5 | 98.0 | 95.5 | 95.0 | 94.6 | 95.0 | 98.0 | 93.0 | 98.8 | 98.0 | 93.0 |
| | MA | parts | 0.8 | 2.0 | 4.5 | 2.0 | 4.5 | 5.0 | 5.4 | 5.0 | 2.0 | 7.0 | 1.2 | 2.0 | 7.0 |
| | EGDM | parts | - | - | - | - | - | - | - | - | - | - | - | - | 0.1 |
| Polymerization initiator | APEH | parts | 0.01 | 0.01 | 0.01 | 0.01 | 0.01 | 0.01 | 0.01 | - | - | 0.01 | - | - | - |
| | BPCH | parts | - | - | - | - | - | - | - | 0.02 | 0.02 | - | 0.02 | 0.02 | 0.02 |
| Chain transfer agent | | parts | 0.40 | 0.37 | 0.39 | 0.41 | 0.35 | 0.41 | 0.37 | 0.40 | 0.35 | 0.37 | 0.24 | 0.15 | 0.35 |
| Mold release agent | | parts | 0.1 | 0.1 | 0.1 | 0.1 | 0.1 | 0.1 | 0.1 | 0.1 | 0.1 | 0.1 | 0.1 | 0.1 | 0.1 |
| Polymerization temperature | | °C | 130 | 130 | 130 | 130 | 130 | 130 | 135 | 175 | 175 | 140 | 175 | 175 | 175 |
| Reduced viscosity | | ml/g | 44 | 46 | 45 | 42 | 49 | 43 | 46 | 45 | 50 | 51 | 52 | 69 | 50 |
| Syndiotacticity (rr) | | % | 50 | 50 | 50 | 50 | 50 | 50 | 49 | 45 | 45 | 48 | 45 | 45 | 45 |
| Vicat softening temperature | | °C | 111 | 111 | 107 | 109 | 108 | 105 | 105 | 100 | 110 | 105 | 110 | 108 | 101 |
| Melt flow rate | | g/10 min. | 11 | 10 | 15 | 14 | 10 | 19 | 15 | 25 | 10 | 11 | 6 | 2 | 20 |
| Contraction amount in high temp. & high humidity environment | | mm | 3 | 4 | 7 | 4 | 7 | 15 | 15 | 20 | 4 | 15 | 6 | - | 17 |
| Presence or absence of silver streaks | | - | G | G | G | G | G | G | G | G | B | G | B | - | G |
| Molding time in thick molding | | min. | 17 | - | - | - | - | - | - | - | - | - | 17 | 20 | - |

The meanings of the abbreviations in Table 1 are as described above, but are described again as follows. The compounds used as a chain transfer agent and a mold release agent are also described above, but are described again as follows.

Monomer component
   MMA: Methyl methacrylate,
   MA: Methyl acrylate,
   EGDM: Ethylene glycol dimethacrylate,
Polymerization initiator
   APEH: Tert-amylperoxy 2-ethylhexanoate,
   BPCH: 1,1-di(tert-butylperoxy)cyclohexane,
Chain transfer agent: N-octylmercaptan,
Mold release agent: Stearyl alcohol.

As to the examples and comparative examples described above, the molding time in thick molding was evaluated only for Example 1 and Comparative Examples 6 and 7, but the methacrylic resin compositions of Examples 2 to 5 are considered to also give generally the same molding time as in Example 1. Further, the methacrylic resin compositions in Examples 1 to 5 give a product excellent in outer appearance even when applied to injection molding of a lens having a diameter of 60 mm and a maximum thickness of about 27 mm.

### Industrial Applicability

According to the methacrylic resin composition of the present invention, an injection-molded article high in fluidity and excellent in heat resistance can be produced. In addition, the composition can give effects of suppressing the generation of silver streaks when a thin article such as a light guide plate is molded, allowing thin molding of 1 mm or less in thickness, giving a molded article that is unlikely to contract even in a high temperature and high humidity environment, and allowing the shortening of the molding time required for thick molding of, for example, a vehicular thick molded article or a light guide rod.

## Claims

1. A methacrylic resin composition,
comprising a copolymer obtained by polymerizing monomer components containing methyl methacrylate and an acrylic acid ester, the methyl methacrylate being contained in an amount of 95.5% by weight or more and the acrylic acid ester being contained in amount of 4.5% by weight or less;
having a reduced viscosity of 40 to 50 ml/g at 25°C measured as a solution at a concentration of 0.5 g/50 ml in chloroform; and
having a triad syndiotacticity of 47 to 51% in a methyl methacrylate unit chain.

2. The methacrylic resin composition according to claim 1, wherein the copolymer is produced by bulk polymerization of the monomer components.

3. The methacrylic resin composition according to claim 1 or 2, which comprises a thermal stabilizing agent.

4. The methacrylic resin composition according to any one of claims 1 to 3, which comprises 0.01 to 1% by weight of a mold release agent with respect to a total amount of the methacrylic resin composition.

5. The methacrylic resin composition according to any one of claims 1 to 4, which is used for injection molding.

6. An injection-molded article produced by injection molding of the methacrylic resin composition according to any one of claims 1 to 4.
